(19) Europäisches Patentamt European Patent Office Office européen des brevets

(11) **EP 3 096 155 B1**

(12) **EUROPEAN PATENT SPECIFICATION**

(45) Date of publication and mention
of the grant of the patent:
**02.12.2020  Bulletin 2020/49**

(51) Int Cl.:
**G01S 5/02** (2010.01)

(21) Application number: **15305777.3**

(22) Date of filing: **22.05.2015**

(54) **A METHOD FOR USE IN DETERMINING THE LOCATION OF USER EQUIPMENT WITHIN A REGION, A LOCATION SERVER AND A COMPUTER PROGRAM PRODUCT**

VERFAHREN ZUR VERWENDUNG BEI DER BESTIMMUNG VON BENUTZERAUSRÜSTUNG INNERHALB EINES BEREICHS, STANDORTSERVER UND COMPUTERPROGRAMMPRODUKT

PROCÉDÉ PERMETTANT DE DÉTERMINER L'EMPLACEMENT D'UN ÉQUIPEMENT D'UTILISATEUR DANS UNE RÉGION, SERVEUR DE LOCALISATION ET PRODUIT LOGICIEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.11.2016  Bulletin 2016/47**

(73) Proprietor: **Alcatel Lucent**
**91620 Nozay (FR)**

(72) Inventors:
• **CLAUSSEN, Holger**
**Dublin, 15 (IE)**
• **DASHTI, Marzieh**
**Dublin, 15 (IE)**
• **MAHMOUDI, Hamed**
**Dublin, 15 (IE)**

(74) Representative: **Bryers LLP**
**7 Gay Street**
**Bath, Bath and North East Somerset BA1 2PH (GB)**

(56) References cited:
**US-A1- 2014 171 118**

• **MOHTASHEMI BRIAN ET AL:
"Source-Observation Weighted Fingerprinting for machine learning based localization", 2014 WIRELESS TELECOMMUNICATIONS SYMPOSIUM, IEEE, 9 April 2014 (2014-04-09), pages 1-6, XP032606525, DOI: 10.1109/WTS.2014.6835033 [retrieved on 2014-06-13]**
• **LING PEI ET AL: "The evaluation of WiFi positioning in a Bluetooth and WiFi coexistence environment", UBIQUITOUS POSITIONING, INDOOR NAVIGATION, AND LOCATION BASED SERVICE (UPINLBS), 2012, IEEE, 3 October 2012 (2012-10-03), pages 1-6, XP032307942, DOI: 10.1109/UPINLBS.2012.6409768 ISBN: 978-1-4673-1908-9**
• **ROOS T ET AL: "A probabilistic approach to WLAN user location estimation", INTERNATIONAL JOURNAL OF WIRELESS INFORMATION NETWORKS, PLENUM PRESS, NEW YORK, NY, US, vol. 9, no. 3, 1 July 2002 (2002-07-01), pages 155-164, XP002303670, ISSN: 1068-9605, DOI: 10.1023/A:1016003126882**

## Description

TECHNICAL FIELD

Aspects relate, in general, to a method for use in determining the location of user equipment within a region a location server and a computer program product.

BACKGROUND

Location determination of mobile devices in indoor environments has attracted significant attention due to its numerous applications in areas of mobile networking, emergency, defense, retail shopping, e-health, social networking, and so on. Some examples of location-based services are locating people and navigating them to their destinations in shopping malls, airports, hospitals, and museums, recommending nearest services such as ATMs, retail stores, restaurants and social events, location-based advertising, finding and tracking stolen or lost objects, monitoring human activities, and so on.

Location Fingerprinting (LF) is a localization technique for many location aware applications. The LF technique uses a radio frequency (RF) fingerprint database (typically called a radio map) of the field of interest. The radio map contains RF measurements from multiple base stations at multiple known locations (fingerprints). A device, such as user equipment (UE) at the location in question measures the radio signals from multiple base stations; these radio signals are then compared against the fingerprints which are pre-recorded in a radio map to identify the device's location. The device is located at the fingerprint that best matches its RF measurements.

A dual source-observation weighted localisation method for Wi-Fi positioning using Tikhonov regularisation cost functional minimisation is described in the paper "Source-Observation Weighted Fingerprinting for Machine-Learning-Based Localisation" by B. Mohtashemi and T. Ketsioglou, 2014 IEEE Wireless Telecommunications Symposium, pp I-6. A weight

$$w_j = N / \sum_{i=1}^{N} H_{ij}$$

for a given access point (AP) j is calculated using entropy values $H_{ij}$ for N reference locations, the entropy values representing the number of transmit power states observed at the reference locations.

A method of localisation using a database of Wi-Fi fingerprints is described in the paper "The Evaluation of Wi-Fi Positioning in a Bluetooth and Wi-Fi Coexistence Environment" by L. Pei et al, Ubiquitous Positioning, Indoor Navigation and Location-Based Service (UPINLBS) 2012 (IEEE), pp I-6. For each of a series of physical reference locations, received signal strength (RSS) probability distributions for all Wi-Fi APs accessible by a UE are stored as fingerprints in a database.

Another probabilistic approach based on an empirical model which describes the distribution of received signal power at various locations is described in the paper "A Probabilistic Approach to WLAN User Location Estimation" by T. Roos et al, International Journal of Wireless Information Networks 9, July 2002 (Plenum Publishing).

SUMMARY

According to an example, there is provided a method, for use in determining the location of user equipment within a region, the method comprising, for each of a plurality of access points accessible by the user equipment within the region, generating a measure of the diversity of received signal strength (RSS) values by calculating an entropy value and generating an entropy weight measure using the entropy value, characterised in that the method further comprises determining a measurement of RSS for each access point at each of a plurality of pre-defined locations within the region, discretising the RSS measurements by binning the measurements into respective selected ones of a predefined number of bins over an interval defined by maximum and minimum observed RSS measurements over all pre-defined locations for the plurality of access points, each bin representing a respective range of RSS values, and, for each access point, calculating an entropy value using a function of probabilities each of which corresponds to the probability of observing a RSS value for the given access point within a respective bin. The entropy value, $E_i$, for a given access point, i, can be calculated using the function:

$$E_i = -\sum_{b=1}^{B} P_b^i \log P_b^i$$

wherein B is the predefined number of bins and $P_b^i$ is the probability of observing a RSS value for the access point i within a bin b. The entropy weight measure $w_i$ for a given access point i can be generated by calculating:

$$w_i = \frac{E_i}{\sum_{j=1}^{N} E_j}$$

wherein $0 \le w_i \le 1$ and $\sum_{i=1}^{N} w_i = 1$, and N is the total number of access points contributing in location estimation. The method can further comprise dividing the region into zones, and generating a respective set of entropy weight measures $w_i^{(k)}$ for each access point, zone pair i, k where k is a zone index. The zone within which the user equipment is located can be determined, and the position of the user equipment in the zone can be calculated using the entropy weight measures $w_i^{(k)}$ associated with the zone in question. The method can further comprise determining, at the user equipment, RSS measurements for respective ones of the multiple access points to form a location fingerprint for the user equipment at a location within the region, and comparing the location fingerprint with predetermined location fingerprints each comprising a respective set of RSS measurements for the plurality of access points at a respective predefined location within the region, wherein each entropy weight measure is used to modify the contribution of RSS measurements of a corresponding access point to a determination of user equipment position relative to the access points.

According to an example, there is provided a location server in a wireless telecommunication network, the location server being operable to, for each of a plurality of access points accessible by a user equipment (UE) within a region, generate a measure of the diversity of received signal strength (RSS) values by calculating an entropy value and generate an entropy weight measure using the entropy value, receive an RF fingerprint from UE in the region, perform a comparison of the RF fingerprint against each of a set of pre-existing RF fingerprints for the region to determine the location of the UE within the region, characterised in that the location server is operable to receive RSS measurements observed at respective multiple predefined locations within the region from respective ones of multiple access points accessible at the region, discretise the RSS measurements by binning the measurements into respective selected ones of a predefined number of bins over an interval defined by maximum and minimum observed RSS measurements over all predefined locations for the multiple access points, each bin representing a respective range of RSS values, and compare the RF fingerprint to a given pre-existing fingerprint using a set of entropy weight measures each of which corresponds to one of the multiple access points and is generated from a corresponding entropy value calculated using a function of probabilities each of which corresponds to the probability of observing a RSS value for the access point within a respective bin. The region can be divided into multiple zones, and the location server can determine a zone of the region within which the UE is located using the set of entropy weight measures for the region, and determine the location of the UE within the zone using a set of entropy weight measures associated with the zone in question.

The location server can calculate a modified Euclidean distance $D_j$ in signal space between the RF fingerprint from the UE and every $j$-th fingerprint from the set of pre-existing RF fingerprints for the region according to:

$$D_j = \frac{1}{N} \sqrt{\sum_{i=1}^{N} w_i \left(r_i^{(UE)} - r_i^{(F_j)}\right)^2}$$

where $w_i$ is entropy weight measure of $i$-th access point and $r_i^{(UE)}$, $r_i^{(Fj)}$ are the RSSs from the ith access point at the UE and at the location corresponding to the jth RF fingerprint, respectively. An entropy weight measure for an access point i can be generated by calculating:

$$w_i = \frac{E_i}{\sum_{j=1}^{N} E_j}$$

wherein $0 \leq w_i \leq 1$, $\sum_{i=1}^{N} w_i = 1$, N is the total number of access points contributing in location estimation and $E_i$ is the entropy value corresponding to the access point i.

According to an example, there is provided a computer program product, comprising a computer usable medium having computer readable program code embodied therein, said computer readable program code adapted to be executed to implement a method for use in determining the location of user equipment within a region as provided herein.

BRIEF DESCRIPTION OF THE DRAWINGS

Embodiments will now be described, by way of example only, with reference to the accompanying drawings, in which:

Figure 1 is a schematic representation of a region according to an example;

Figure 2 is a schematic representation according to an example, depicting a radio map for the region;

Figure 3 is a schematic representation of the region of figures 1 and 2 according to an example;

Figure 4 is a schematic representation of a partitioned region according to an example;

Figure 5 is a schematic representation of a partitioned region according to an example;

Figure 6 is a schematic representation of a partitioned region according to an example;

Figure 7 is a schematic representation of location estimation using dynamic zones according to an example; and

Figure 8 is a schematic representation of a system according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In a location fingerprinting system, each RF Fingerprint is a unique signature of the location where it is recorded. Every fingerprint captures multipath characteristics of its location and hence the LF technique mitigates non line-of-sight (NLoS) effects and can provide accurate positioning information. LF provides meter-level location accuracy given a reliable fingerprint database. A reliable RF fingerprint is spatially unique and temporarily stable.

Location fingerprinting (LF) techniques infer user equipment (UE)'s location by comparing the UE's RF measurements against RF fingerprints which are pre-recorded in a radio map. Fingerprints are collected in multiple known locations (reference locations) in an offline phase. Every fingerprint is a geo-tagged vector of RF measurements from $k$ observed access points (APs). In an online phase, a UE at the location in question measures the radio signals from $l$ available APs and reports the online measurement vector to a location server for example. The location server locates the UE at the fingerprint that best matches its current RF measurement vector.

To find the best matching fingerprint, the most widely used technique is based on minimizing Euclidean signal distance. Typically, assuming that $N$ common APs are observed by a UE and are measured at $j$-th reference location, the Euclidean distance in signal space between the UE and $j$-th fingerprint can be calculated as

$$D_j = \frac{1}{N}\sqrt{\sum_{i=1}^{N}\left(r_i^{(UE)} - r_i^{(F_j)}\right)^2}$$ , where $r_i^{(UE)}$ and $r_i^{(F_j)}$

denote received signal strengths (RSS) values from the $i$-th common access point observed by UE and measured at $j$-th reference location respectively. The UE is located at the fingerprint location which minimizes the signal distance $D$.

In common LF techniques, measurements from every AP that are accessible to the UE in a given region are given the same confidence in UE's location estimation. More enhanced LF techniques apply different weights to every measurement according to its signal strength, temporal- stability or measurement accuracy. For example, in some approaches, an AP that is seen with stronger signal strength contributes with a relatively higher weight in a location estimation process. However, signal strength is not a comprehensive metric to evaluate how much information every measurement contains about UE location. For example, many locations in an open space office can be in line-of-sight view of an AP and hence a similar high signal strength from that AP is measured at many locations. That is, an access point that contributes to an RF fingerprint at a given location, may also contribute to RF fingerprints at multiple other locations.

Another example is that an AP which is located outside the building (field or region of interest for localization) can be detected with an almost flat low radio signal strength (RSS) value in many locations inside the building. None of these flat high or flat low measurement values can specify a unique location. As a result, no existing approach shows any significant improvements in location estimation and no existing approach considers how much unique information an AP provides about a location.

According to an example, an offline analytic approach to quantify the uniqueness and reliability of fingerprints is provided. More specifically, measurements from APs within a region contribute with different weights in estimating a device's location, where the weights are applied to each measurement according to its spatial uniqueness. In an example, a measure of the entropy as a metric of spatial uniqueness of measurements is used. For example, Shannon's Entropy can be used as a metric of spatial uniqueness of measurements. This can significantly improve the accuracy of LF over existing approaches.

Due to placement of APs and the structure of a building for example, some APs may be detected with similar RSS levels in some regions inside the building and some other APs may be scanned with more diverse RSS values in different regions in the building. Insight into how much information every AP provides about locations at different regions of the building can be gained by looking at a signal strength heatmap in an offline pre-processing stage. An entropy measure, such as Shannon's Entropy for example, can be used as a metric of RSS measurement diversity. Accordingly, in an example, measurements from different APs get different weights for the purposes of location estimation. Such a method is broadly applicable to signals from wireless networks such as WiFi, GSM, UMTS, LTE, and so on.

According to an example, in an offline phase a radio map of a region of interest containing pre-recorded fingerprints at multiple known locations can be generated. The radio map can be collected in an offline phase either manually or using crowd sourcing approaches for example in which radio measurements from various locations at the region can be provided by multiple users in order to build up a fingerprint database for the region.

A fingerprint is a vector of RF measurements from multiple observed APs. In an example, the APs are those which are accessible to UE at the region. Accordingly, APs that contribute to a fingerprint are typically those that UE may be able to connect with or otherwise detect. The most common type of RF measurements used for LF are received signal strength (RSS) measurements. The radio signal can be from WiFi access points, GSM, UMTS or LTE base stations, or other RF-based networks. To avoid extra deployment costs and effort, already existing radio infrastructures indoor, e.g., WiFi and Small Cells can be exploited.

In general, the collection of RF fingerprints at multiple locations at a region using UE is well-known, and will not be described in any further detail herein. Multiple RF fingerprints are provided can be a fingerprint database, or more generally a list or catalogue. For example, at a given location, multiple RSS measurements are taken, measured or sampled to provide a fingerprint for that location in the form of a geo-tagged vector of RF measurements from the multiple observed access points, as described above.

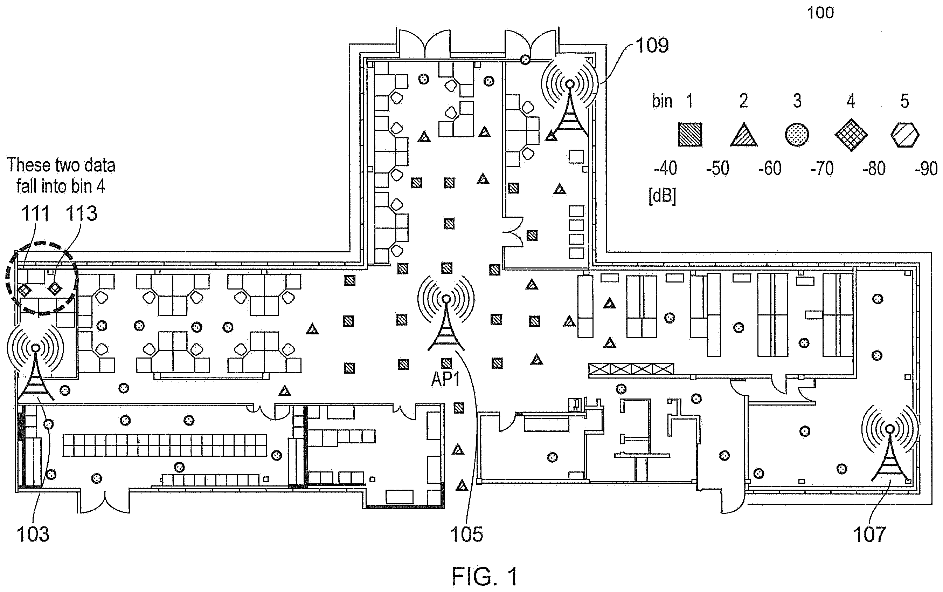

After collecting fingerprints, the spatial uniqueness of measurements from every AP is quantified in an offline pre-analytical process. In this connection, figure 1 is a schematic representation of a region according to an example. The region 100 is shown in plan in the form of a floorplan. Multiple APs 103, 105, 107, 109 are provided at the region 100. Multiple locations, indicated by the squares dispersed over the region 100 are depicted.

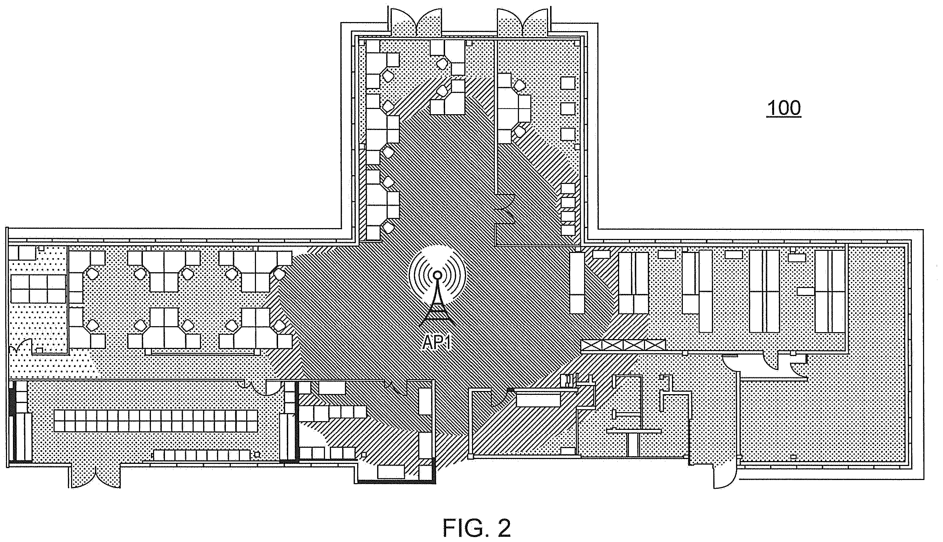

At each location, an RF fingerprint is determined by measuring the RSS values from the APs at the region 100. Accordingly, for a given location, such as 111, an RF fingerprint is vector comprising RSS values from the four APs accessible by a device at the location 111. Fingerprints for each location at the region 100 are generated to form a fingerprint database for the region 100, and initially the fingerprint database is arranged so that for every AP, there is a list of locations where that AP has been seen (location reports). Figure 1 is in the form of a discrete signal strength heat map showing the relative RSS values measured at the locations from API, 105. Figure 2 is a schematic representation according to an example, depicting a radio map for the region 100 showing the relative RSS values measured at the locations from API, 105.

According to an example, the probability of observing an AP with any RSS value is calculated. RSS measurements can have any real value but not all such values are observed. In order to be able to calculate the probability, the RSS values are discretized into a finite number of bins or ranges. Data binning enables allows a sufficient number of observations for each bin and also reduces the effects of minor observation errors.

Assume that the strongest and weakest RSS values recorded in entire data base are $RSS_{max}$ and $RSS_{min}$ respectively. The RSS values of every AP are divided into equally-sized bins for the interval of $[RSS_{min}, RSS_{max}]$. In an example, the number of bins is a pre-defined value, $B$. For example, for the region of figure 1, the RSS values are binned into bins of size 10dB over an interval of [-90dB, -40dB]. For simplicity of description, in this example, the bin size is assumed big and consequently the number of bins is considered small.

For every AP, the number of location reports which fall into every bin is calculated. In the example of figure 1, location reports for location 111, 113 fall into bin number 4. The probability of observing each bin by every AP is then calculated. More specifically, the probability of observing $b$- th bin from $i$- th AP is:

$$P_b^i = \frac{\text{number of location reports fall into } b-\text{th bin}}{\text{totall number of location reports}}$$

An entropy-based metric which measures the diversity of RSS values from each AP is calculated. Accordingly, the Entropy of $i$-th AP is:

$$E_i = -\sum_{b=1}^{B} P_b^i \log P_b^i$$

where $B$ is the pre-defined number of bins.

According to an example, entropy is used as a measure of diversity, meaning that the larger the entropy of an AP the more information that AP provides about location. Conversely, the smaller the entropy value of an AP the less information that AP provides about location. Therefore, according to an example, an AP with a larger measure of Entropy contributes with a higher weight in location estimation.

Thus, the Entropy-weight of every *i*-th AP is defined as:

$$w_i = \frac{E_i}{\sum_{j=1}^{N} E_j}$$

where $0 \leq w_i \leq 1$ and $\sum_{i=1}^{N} w_i = 1$, and where N is the total number of access points contributing in location estimation.

The entropy weighting described above combines measurements according to the importance of their information about locations.

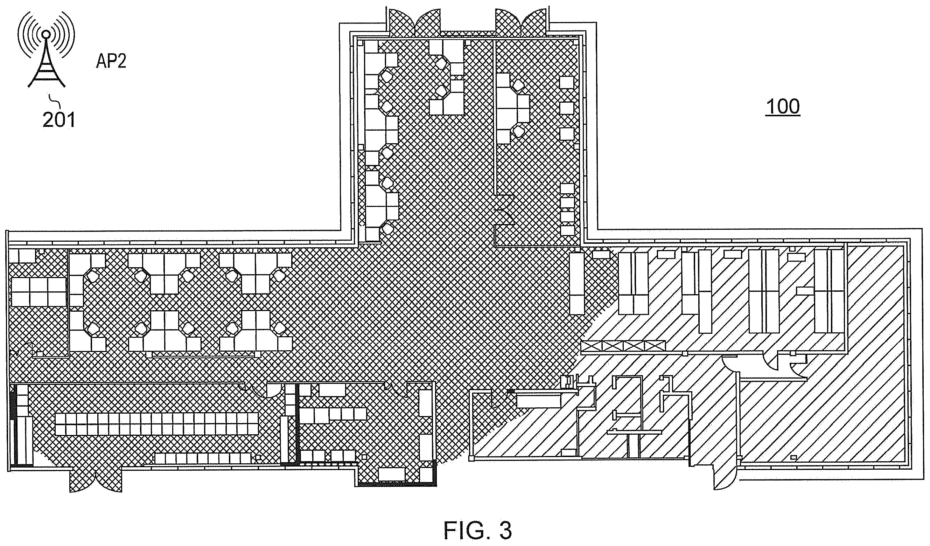

Figure 3 is a schematic representation of the region of figures 1 and 2 according to an example. Figure 3 is a heat map representing RSS values from an AP, AP2 (201) in the region 100. The measurements from AP1 shown in figure 2 are diverse compared with measurements from AP2 shown in figure 3. Therefore, in an example, AP1 has a higher entropy weight than AP2.

In online positioning phase, a UE is located at the best matched fingerprint. That is, the current RF fingerprint of a UE can be compared against the fingerprint database in order to determine the best match. The fingerprint most closely matching, in terms of Euclidean distance for example, the current fingerprint of the device enables the position of the device to be determined.

According to an example, in order to find the best matching entry in a database of existing RF fingerprints for multiple locations in a region, a modified Euclidean distance is calculated in signal space between a UE and every *j*-th fingerprint according to:

$$D_j = \frac{1}{N} \sqrt{\sum_{i=1}^{N} w_i \left( r_i^{(UE)} - r_i^{(F_j)} \right)^2}$$

where $w_i$ is Entropy weight of *i*-th AP.

In the above example, one Entropy weight is assigned to every AP by looking at diversity of RSS values of that AP in the entire floorplan of the building, i.e., one global weight is assigned to each AP.

According to an example, this can be further extended by assigning local Entropy weights to every AP in addition to one global Entropy weight. For example, two APs may have similar global entropies but in some specific regions in a building, one may be more informative than the other.

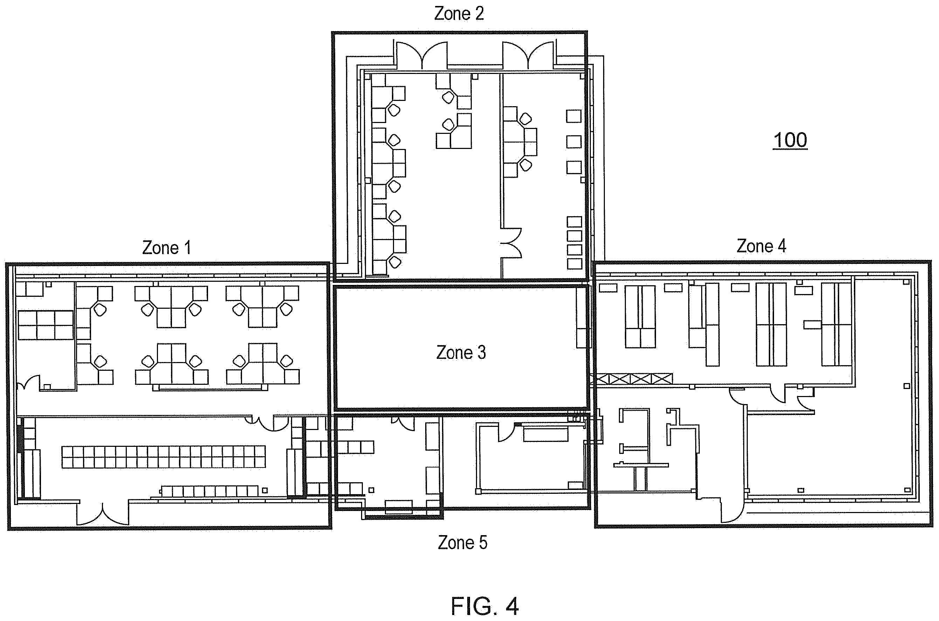

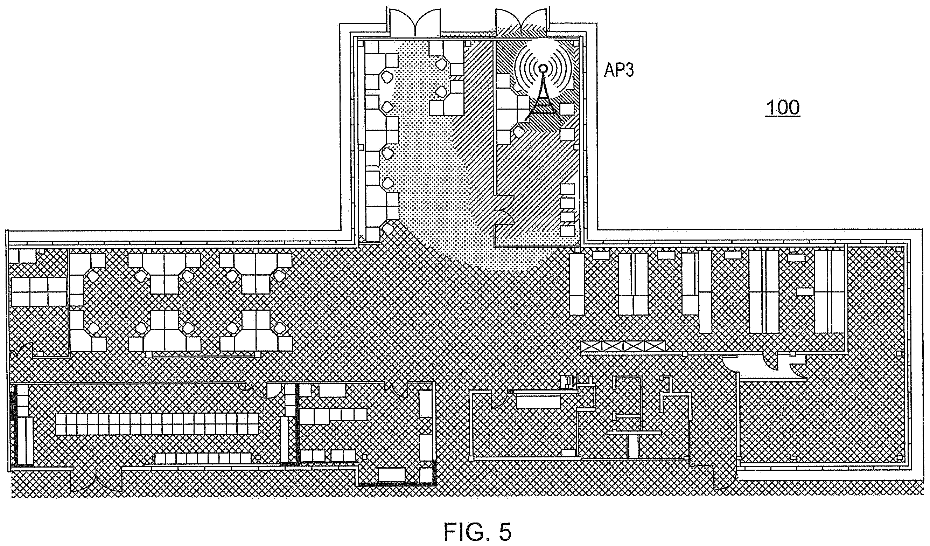

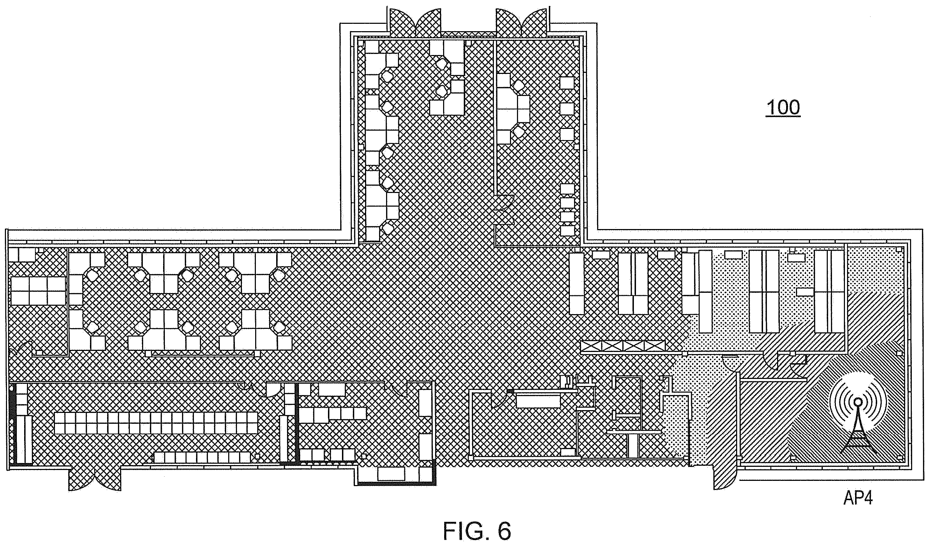

Figure 4 is a schematic representation of a partitioned region according to an example. In the example of figure 4, the region 100 is partitioned into five regions, zones 1-5. AP3 shown in Figure 5 and AP4 shown in Figure 6 have similar Entropy values across whole building. However they have quite different Entropy values considering only Zone 4 shown in figure 4. AP4 shown in Figure 6 is observed with diverse values in Zone 4 whereas AP3 shown in Figure 5 is observed with almost a flat value across zone 4.

According to an example, assigning local Entropy weights to every AP in addition to one global Entropy weight can be implemented in a pre-processing stage as follows:

As depicted in figure 4, a region is divided into geographic regions. For example an enterprise building can be divided into workspace areas, open space areas, corridors, laboratories, adjacent rooms, and so on. This can be performed manually, or automatically if an existing plan of a region exists which includes zonal information to demarcate different areas of the region.

For every region, the local Entropy weight of each *i*-th AP is calculated in the same was as described above. For every AP, there are z local Entropy weights, where z is the number of total zones (regions) inside the region. In the example of figure 4, five local weights are assigned to every *i*-th AP, i.e., $\{w_i^{(1)}, w_i^{(2)}, w_i^{(3)}, w_i^{(4)}, w_i^{(5)}\}$

In an online positioning phase, firstly the location of UE is calculated by assigning a global entropy $w_i$ to each *i*-th AP. This provides a rough location estimation. In next stage, knowing the zone of the region where the user is located (e.g., zone z), the UE's location is recalculated by applying a corresponding local entropy weight $w_i^{(z)}$ to each *i*-th AP. Accordingly, location estimation is refined.

In the rough localization stage, a user may be located in the boundary of zones. To resolve such an edge problem, the entropy of each AP for merged adjacent regions can be calculated and in the second refinement stage, instead of selecting one region, merged neighbor regions can be considered. That is, if in the rough localization stage a user's location is estimated to be in the boundary of zones (regions), those adjacent zones (where the user is at their boundaries) can be merged to make a bigger zone. Then, the entropy of that combined zone is calculated and can be considered for the location estimation.

Thus, to calculate the local Entropy weights, a region can be divided into geographical zones, i.e., static zones. The Entropy weights of APs in any of these predefined static zones are precalculated in offline phase. In an example, this can be further improved by performing iterative location estimation in which localized entropy weights are updated based on location estimates. For example, a first iteration localizes a UE as described above based on global entropy weights for the whole region. Subsequently, a localization error can be estimated and a radius *r* can be defined around the location estimate in which we fall with a 99.9% (or similar) certainty (e.g. 16m).

New entropy weights for the uncertainty region with radius $r$ (dynamic region) around the current estimate can be generated, and the location estimate updated based on the localized entropy weights. This can be repeated until a solution is converged at. For example, until the radius within which the location falls reaches a predetermined value.

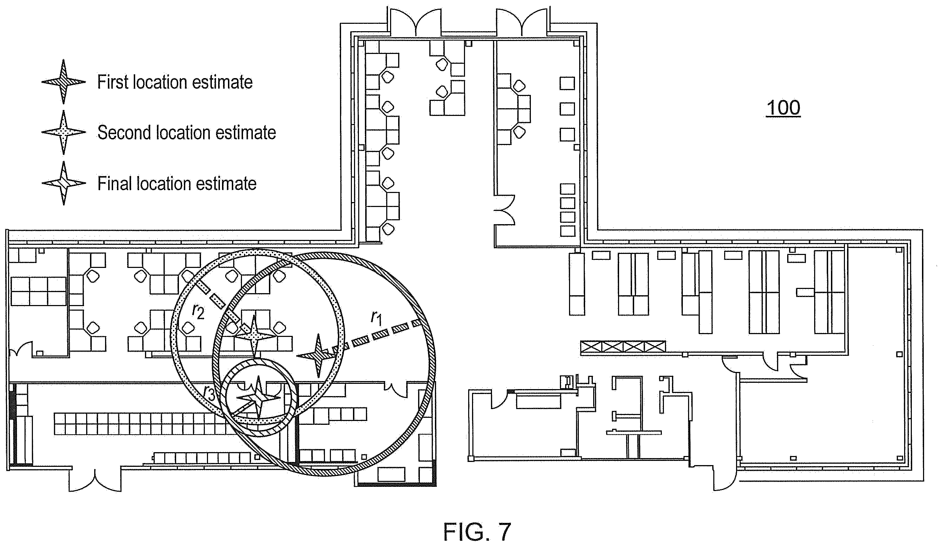

Figure 7 is a schematic representation of location estimation using dynamic zones according to an example. In a region 100, a first location estimate is determined resulting in a radius r1, which provides a region within which a UE is determined to be located with a degree of confidence at or above a predefined value. A subsequent iteration in which localized entropy weights are updated based on location estimates results in a second location estimate providing a confidence radius r2. A further iteration converges to a location estimate within a region of radius r3, as depicted in figure 7.

As described, a region can be divided into geographic zones, e.g., rooms, corridors, etc. Smaller zones result in more accurate location estimates. An optimal region size is small enough to refine the location estimates however it should be large enough to observe RSS value diversity since RSS values from a reliable AP in a very small region are stable. That is, RSS values from an AP that are observed in a very small region do not fluctuate a lot, e.g., variations will typically not exceed more than 2-3 dB. Accordingly, in a very small region RSS values from a reliable AP fall into a single bin with a small variance.

Entropy is provided as a measure of the diversity of signal strength values received from every AP at different locations. The entropy value of every AP determines how much unique information that AP provides about a location. In an example, standard deviation can also be a measure of data diversity. For example, standard deviation can be used to measure the RSS variation from the average (and it depends on the RSS values), whereas entropy measures how diversely RSS values are distributed regardless of the RSS values itself.

For example, if the RSS values from an AP take two values ($-rss,rss$) dB with equal probability then the standard deviation is equal to $rss$ which obviously increases when rss changes, but the entropy is constant. In an example, the measurements from every AP are weighted according to diversity of the RSS measurements from that AP irrespective of RSS values. For example, assume that an AP is observed with a flat strong signal strength in a region and another AP is observed with an almost flat weak signal strength in that region, measurements from both of these APs are non-informative regardless of their RSS values. Therefore, they contribute with similar weights in UE location estimation.

In an example, measurements from all available APs are used since every AP is an input for location estimation and every measurement is weighted according to its importance. An available AP can be an AP which is accessible by UE at a location or over all locations in a region. In an example, a selected set of APs for location estimation (assigning zero weight to unselected APs) can be used in order to reduce localization computational time.

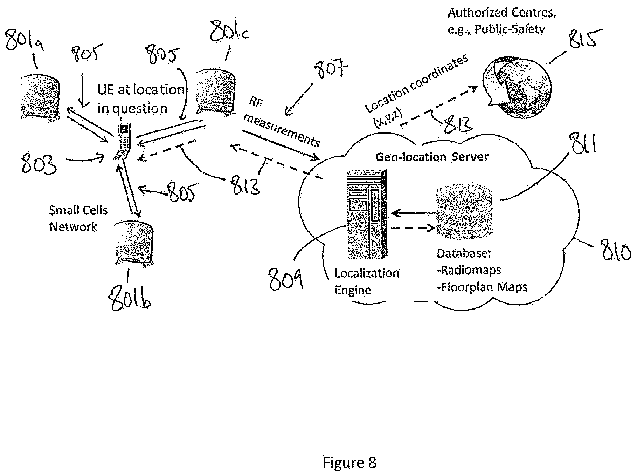

Figure 8 is a schematic representation of a system according to an example. Multiple base station (BS) nodes 801a-c are depicted, which periodically transmit radio signals. The radio signal could be from GSM, UMTS or LTE base stations, WiFi, or other radio technologies. To avoid extra deployment costs and effort, existing radio infrastructures indoor, e.g., indoor Metro Cells, Femto Cells and WiFi nodes can be used. That is, nodes 801a-c can be WiFi access points for example. A UE 803 can send and receive data 805 to/from one or more of the access points 801a-c.

As described above, LF uses a radio map of geo-tagged RF measurements, where a map can be a discrete map for multiple locations. The most common type of RF measurements used for LF is the received signal strength (RSS) measurements. Small Cell RSS measurements 807 are reported to the network as a part of standard reporting.

A localization engine or location server 809 that stores floor plan maps, radio maps, and locations of BSs and landmarks (if available) is provided using a database 811 for example. The localization server 809 can be a part of a core network (network-based localization) of a wireless telecommunication system 810 and/or the node (terminal-based localization) of such a system. The localization engine 809 can be located at a cloud server which can be centrally managed by authorized centers, or locally by the building managers or enterprise owners.

In an example, engine 809 calculates UE's 803 location by comparing UE's real-time RF measurements 807 with prerecorded entries in the radio map in database 811. The location data 813 can be provided back to the UE 803 via one of the access points 801a-c, or using another network node (not shown). The UE location data 813 can be provided to an external authorized center or device 815 for the purposes of public safety for example.

The present inventions can be embodied in other specific apparatus and/or methods. The described embodiments are to be considered in all respects as illustrative and not restrictive. In particular, the scope of the invention is indicated by the appended claims rather than by the description and figures herein.

## Claims

1. A method, for use in determining the location of user equipment within a region, the method comprising, for each of a plurality of access points accessible by the user equipment within the region:

   generating a measure of the diversity of received signal strength (RSS) values by calculating an entropy value; and
generating an entropy weight measure using the entropy value,

**characterised in that** the method further comprises:

determining a measurement of RSS for each access point at each of a plurality of pre-defined locations within the region and discretising the RSS measurements by binning the measurements into respective selected ones of a predefined number of bins over an interval defined by maximum and minimum observed RSS measurements over all pre-defined locations for the plurality of access points, each bin representing a respective range of RSS values; and
for each access point, calculating an entropy value using a function of probabilities each of which corresponds to the probability of observing a RSS value for the given access point within a respective bin.

2. A method as claimed in 1, wherein the entropy value $E_i$ for a given access point i is calculated using the function

$$E_i = -\sum_{b=1}^{B} P_b^i \log P_b^i$$

wherein B is the predefined number of bins and $P_b^i$ is the probability of observing a RSS value for the access point i within a bin b.

3. A method as claimed in claim 2, wherein the entropy weight measure $w_i$ for a given access point i is generated by calculating:

$$w_i = \frac{E_i}{\sum_{j=1}^{N} E_j}$$

wherein $0 \le w_i \le 1$, $\sum_{i=1}^{N} w_i = 1$, and N is the total number of access points contributing in location estimation.

4. A method as claimed in any preceding claim, further comprising:

dividing the region into zones; and
generating a respective set of entropy weight measures $w_i^{(k)}$ for each access point, zone pair i, k where k is a zone index.

5. A method as claimed in claim 4, further comprising;
determining the zone within which the user equipment is located; and
calculating the position of the user equipment in the zone using the entropy weight measures $w_i^{(k)}$ associated with the zone in question.

6. A method as claimed in any preceding claim, further comprising:

determining, at the user equipment, RSS measurements for respective ones of the multiple access points to form a location fingerprint for the user equipment at a location within the region; and
comparing the location fingerprint with predetermined location fingerprints each comprising a respective set of RSS measurements for the plurality of access points at a respective predefined location within the region, wherein each entropy weight measure is used to modify the contribution of RSS measurements of a corresponding access point to a determination of user equipment position relative to the access points.

7. A location server in a wireless telecommunication network, the location server being operable to: for each of a plurality of access points accessible by a user equipment (UE) within a region, generate a measure of the diversity of received signal strength (RSS) values by calculating an entropy value and generate an entropy weight measure using the entropy value;
receive an RF fingerprint from UE in the region;
perform a comparison of the RF fingerprint against each of a set of pre-existing RF fingerprints for the region to determine the location of the UE within the region, **characterised in that** the location server is operable to:
receive RSS measurements observed at respective multiple predefined locations within the region from respective ones of multiple access points accessible at the region;
discretise the RSS measurements by binning the measurements into respective selected ones of a predefined number of bins over an interval defined by maximum and minimum observed RSS measurements over all predefined locations for the multiple access points, each bin representing a respective range of RSS values; and
compare the RF fingerprint to a given pre-existing fingerprint using a set of entropy weight measures each of which corresponds to one of the multiple access points and is generated from a corresponding entropy value calculated using a function of probabilities each of which corresponds to the probability of observing a RSS value for the access point within a respective bin.

8. A location server as claimed in claim 7, wherein the region is divided into multiple zones, the location server further operable to:

    determine a zone of the region within which the UE is located using the set of entropy weight measures for the region; and
    determine the location of the UE within the zone using a set of entropy weight measures associated with the zone in question.

9. A location server as claimed in claim 7 or claim 8, wherein the location server is operable to calculate a modified Euclidean distance $D_j$ in signal space between the RF fingerprint from the UE and every $l$-th fingerprint from the set of pre-existing RF fingerprints for the region according to:

$$D_j = \frac{1}{N}\sqrt{\sum_{i=1}^{N} w_i \left( r_i^{(UE)} - r_i^{(F_j)} \right)^2}$$

where $w_i$ is the entropy weight measure of the $i$-th access point and $r_i^{(UE)}, r_i^{(Fj)}$, are the RSSs from the ith access point at the UE and at the location corresponding to the jth RF fingerprint, respectively.

10. A location server as claimed in claim 9, wherein the location server is operable to generate an entropy weight measure for an access point i by calculating:

$$w_i = \frac{E_i}{\sum_{j=1}^{N} E_j}$$

wherein $0 \le w_i \le 1$, $\sum_{i=1}^{N} w_i = 1$, N is the total number of access points contributing in location estimation and $E_i$ is the entropy value corresponding to the access point i.

11. A computer program product, comprising a computer usable medium having computer readable program code embodied therein, said computer readable program code adapted to be executed in a computer of a location server according to any of claims 7-10 to implement a method for use in determining the location of user equipment within a region as claimed in any of claims 1 to 6.

**Patentansprüche**

1. Verfahren zur Verwendung beim Bestimmen des Standorts einer Teilnehmereinrichtung in einer Region, wobei das Verfahren für jeden einer Vielzahl von Zugangspunkten, die für die Teilnehmereinrichtung in der Region zugänglich sind, Folgendes umfasst:

    Erzeugen eines Maßes der Verschiedenheit von Empfangssignalstärke(RSS)-Werten durch Berechnen eines Entropiewerts; und
    Erzeugen eines Entropiegewichtungsmaßes unter Verwendung des Entropiewerts, **dadurch gekennzeichnet, dass** das Verfahren ferner Folgendes umfasst:

        Bestimmen einer Messung von RSS für jeden Zugangspunkt an jedem der Vielzahl von vordefinierten Standorten in der Region und Diskretisieren der RSS-Messungen durch Binning der Messungen in jeweilige ausgewählte einer vordefinierten Anzahl von Bins über ein Intervall, das von maximalen und minimalen beobachteten RSS-Messungen über alle vordefinierte Standorte für die Vielzahl von Zugangspunkten definiert ist, wobei jeder Bin einen jeweiligen Bereich von RSS-Werten repräsentiert; und für jeden Zugangspunkt Berechnen eines Entropiewerts unter Verwendung einer Funktion von Wahrscheinlichkeiten, von denen jede der Wahrscheinlichkeit des Beobachtens eines RSS-Werts für den gegebenen Zugangspunkt in einem jeweiligen Bin entspricht.

2. Verfahren nach Anspruch 1, wobei der Entropiewert $E_i$ für einen gegebenen Zugangspunkt i unter Verwendung der 30 folgenden Funktion berechnet wird

$$E_i = -\sum_{b=1}^{B} P_b^i \log P_b^i$$

  wobei B die vordefinierte Anzahl von Bins ist und $P_b^i$ die Wahrscheinlichkeit des Beobachtens eines RSS-Werts für den Zugangspunkt i in einem Bin b ist.

3. Verfahren nach Anspruch 2, wobei das Entropiegewichtungsmaß $w_i$ für einen gegebenen Zugangspunkt i durch folgende Berechnung erzeugt wird:

$$w_i = \frac{E_i}{\displaystyle\sum_{j=1}^{N} E_j}$$ wobei $0 \le w_i \le 1$, $\displaystyle\sum_{i=1}^{N} w_i = 1$ und N die Gesamtzahl von Zugangspunkten ist, die zur Standortschätzung beitragen.

4. Verfahren nach einem der vorhergehenden Ansprüche, das ferner Folgendes umfasst:

  Teilen der Region in Zonen; und
  Erzeugen eines jeweiligen Satzes von Entropiegewichtungsmaßen $w_i^{(k)}$ für jeden Zugangspunkt, Zonenpaar i, k, wo k ein Zonenindex ist.

5. Verfahren nach Anspruch 4, das ferner Folgendes umfasst;
Bestimmen der Zone, in der sich die Teilnehmereinrichtung befindet; und
Berechnen der Position der Teilnehmereinrichtung in der Zone unter Verwendung des Entropiegewichtungsmaßes $w_i^{(k)}$, das mit der betreffenden Zone verknüpft ist.

6. Verfahren nach einem der vorhergehenden Ansprüche, das ferner Folgendes umfasst:

  Bestimmen von RSS-Messungen für jeweilige der mehreren Zugangspunkte an der Teilnehmereinrichtung, um für die Teilnehmereinrichtung an einem Standort in der Region einen Standortfingerabdruck zu bilden; und
  Vergleichen des Standortfingerabdrucks mit vorbestimmten Standortfingerabdrücken, von denen jeder einen jeweiligen Satz von RSS-Messungen für die Vielzahl von Zugangspunkten an einem jeweiligen vordefinierten Standort in der Region umfasst, wobei jedes Entropiegewichtungsmaß verwendet wird, um den Beitrag von RSS-Messungen eines entsprechenden Zugangspunkts zu einer Bestimmung einer Teilnehmereinrichtungsposition relativ zu den Zugangspunkten zu modifizieren.

7. Standortserver in einem drahtlosen Telekommunikationsnetzwerk, wobei der Standortserver zu Folgendem betreibbar ist: für jeden einer Vielzahl von Zugangspunkten, die für eine Teilnehmereinrichtung (UE) in einer Region zugänglich sind, Erzeugen eines Maßes der Verschiedenheit von Empfangssignalstärke(RSS)-Werten durch Berechnen eines Entropiewerts und Erzeugen eines Entropiegewichtungsmaßes unter Verwendung des Entropiewerts;
Empfangen eines RF-Fingerabdrucks von der UE in der Region;
Durchführen eines Vergleichs jedes RF-Fingerabdrucks mit jedem eines Satzes von bereits existierenden RF-Fingerabdrücken für die Region, um den Standort der UE in der Region zu bestimmen, **dadurch gekennzeichnet, dass** der Standortserver zu Folgendem betreibbar ist:

  Empfangen von RSS-Messungen, die an jeweiligen mehreren vordefinierten Standorten in der Region beobachtet werden, von jeweiligen von mehreren Zugangspunkten, die in der Region zugänglich sind;
  Diskretisieren der RSS-Messungen durch Binning der Messungen in jeweilige ausgewählte einer vordefinierten Anzahl von Bins über ein Intervall, das von maximalen und minimalen beobachteten RSS-Messungen über alle vordefinierte Standorte für die mehreren Zugangspunkte definiert ist, wobei jeder Bin einen jeweiligen Bereich von RSS-Werten repräsentiert; und
  Vergleichen des RF-Fingerabdrucks mit einem gegebenen bereits existierenden Fingerabdruck unter Verwendung eines Satzes von Entropiegewichtungsmaßen, von denen jedes einem der mehreren Zugangspunkte entspricht und aus einem entsprechenden Entropiewert erzeugt wird, der unter Verwendung einer Funktion von Wahrscheinlichkeiten berechnet wird, von denen jede der Wahrscheinlichkeit des Beobachtens eines RSS-Werts für den Zugangspunkt in einem jeweiligen Bin entspricht.

8. Standortserver nach Anspruch 7, wobei die Region in mehrere Zonen geteilt ist, wobei der Standortserver ferner zu Folgendem betreibbar ist:

  Bestimmen einer Zone der Region, in der sich die UE befindet, unter Verwendung des Satzes von Entropiegewichtungsmaßen für die Region; und
  Bestimmen des Standorts der UE in der Zone unter Verwendung des Satzes von Entropiegewichtungsmaßen, die mit der betreffenden Zone verknüpft sind.

9. Standortserver nach Anspruch 7 oder Anspruch 8, wobei der Standortserver betreibbar ist, einen modifizierten Euklidischen Abstand $D_j$ im Signalraum zwischen dem RF-Fingerabdruck von der UE und jedem j-ten Fingerabdruck aus dem Satz von bereits existierenden RF-Fingerabdrücken für die Region gemäß Folgendem zu berechnen:

$$D_j = \frac{1}{N} \sqrt{\sum_{i=1}^{N} w_i \left( r_i^{(UE)} - r_i^{(F_j)} \right)^2}$$

wo $w_i$ das Entropiegewichtungsmaß des i-ten Zu-

gangspunkts ist und $r_i^{(UE)}$, $r_i^{(Fj)}$ die RSS vom i-ten Zugangspunkt an der UE bzw. am Standort, der dem j-ten RF-Fingerabdruck entspricht, sind.

10. Standortserver nach Anspruch 9, wobei der Standortserver betreibbar ist, durch Berechnen von Folgendem ein Entropiegewichtungsmaß für einen Zugangspunkt i zu erzeugen:

$$w_i = \frac{E_i}{\sum_{j=1}^{N} E_j}$$

wobei $0 \le w_i \le 1$, $\sum_{i=1}^{N} w_i = 1$ N die Gesamtzahl von Zugangspunkten ist, die zur Standortschätzung beitragen, und $E_i$ der Entropiewert ist, der dem Zugangspunkt i entspricht.

11. Computerprogrammprodukt, das ein von einem Computer verwendbares Medium umfasst, auf dem sich computerlesbarer Programmcode befindet, wobei der computerlesbare Programmcode angepasst ist, in einem Computer eines Standortservers gemäß einem der Ansprüche 7-10 ausgeführt zu werden, um ein Verfahren zur Verwendung beim Bestimmen des Standorts einer Teilnehmereinrichtung in einer Region nach einem der Ansprüche 1 bis 6 zu implementieren.

## Revendications

1. Procédé, pour une utilisation dans la détermination de la localisation d'un équipement utilisateur au sein d'une région, le procédé comprenant, pour chacun d'une pluralité de points d'accès accessibles par l'équipement utilisateur au sein de la région :

la génération d'une mesure de la diversité de valeurs d'intensité de signal reçu (RSS) par le calcul d'une valeur d'entropie ; et
la génération d'une mesure de pondération d'entropie à l'aide de la valeur d'entropie, **caractérisé en ce que** le procédé comprend en outre :

la détermination d'une mesure de RSS pour chaque point d'accès à chacune d'une pluralité de localisations prédéfinies au sein de la région et la discrétisation des mesures de RSS par le compartimentage des mesures dans des compartiments sélectionnés respectifs d'un nombre prédéfini de compartiments sur un intervalle défini par des mesures de RSS observées maximale et minimale sur toutes les localisations prédéfinies pour la pluralité de points d'accès, chaque compartiment représentant une plage respective de valeurs de RSS ; et pour chaque point d'accès, le calcul d'une valeur d'entropie à l'aide d'une fonction de probabilités dont chacune correspond à la probabilité d'observer une valeur de RSS pour le point d'accès donné au sein d'un compartiment respectif.

2. Procédé selon la revendication 1, dans lequel la valeur d'entropie $E_i$ pour un point d'accès i donné est calculée à l'aide de la fonction

$$E_i = -\sum_{b=1}^{B} P_b^i \log P_b^i$$

dans lequel B est le nombre prédéfini de compartiments et $P_b^i$ est la probabilité d'observer une valeur de RSS pour le point d'accès i au sein d'un compartiment b.

3. Procédé selon la revendication 2, dans lequel la mesure de pondération d'entropie $w_i$ pour un point d'accès i donné est généré par le calcul de :

$$w_i = \frac{E_i}{\sum_{j=1}^{N} E_j}$$

dans lequel $0 \le w_i \le 1$, $\sum_{i=1}^{N} w_i = 1$ et N est le nombre total de points d'accès contribuant à l'estimation de localisation.

4. Procédé selon une quelconque revendication précédente, comprenant en outre :

la division de la région en zones ; et
la génération d'un ensemble respectif de mesures de pondération d'entropie $w_i^{(k)}$ pour chaque paire point d'accès, zone i, k où k est un indice de zone.

5. Procédé selon la revendication 4, comprenant en outre :

la détermination de la zone au sein de laquelle l'équipement utilisateur est localisé ; et
le calcul de la position de l'équipement utilisateur dans la zone à l'aide des mesures de pondération d'entropie $w_i^{(k)}$ associées à la zone en question.

**6.** Procédé selon une quelconque revendication précédente, comprenant en outre :

la détermination, au niveau de l'équipement utilisateur, de mesures de RSS pour des points d'accès respectifs parmi les multiples points d'accès pour former une empreinte digitale de localisation pour l'équipement utilisateur à une localisation au sein de la région ; et
la comparaison de l'empreinte digitale de localisation avec des empreintes digitales de localisation prédéterminées comprenant chacune un ensemble respectif de mesures de RSS pour la pluralité de points d'accès à une localisation prédéfinie respective au sein de la région, dans lequel chaque mesure de pondération d'entropie est utilisée pour modifier la contribution de mesures de RSS d'un point d'accès correspondant en une détermination de position d'équipement utilisateur par rapport aux points d'accès.

**7.** Serveur de localisation dans un réseau de télécommunication sans fil, le serveur de localisation ayant pour fonction de :

pour chacun d'une pluralité de points d'accès accessibles par un équipement utilisateur (UE) au sein d'une région, générer une mesure de la diversité de valeurs d'intensité de signal reçu (RSS) par le calcul d'une valeur d'entropie et générer une mesure de pondération d'entropie à l'aide de la valeur d'entropie ;
recevoir une empreinte digitale radiofréquence, RF, à partir de l'UE dans la région ;
réaliser une comparaison de l'empreinte digitale RF vis-à-vis de chacune d'un ensemble d'empreintes digitales RF préexistantes pour la région pour déterminer la localisation de l'UE au sein de la région,
**caractérisé en ce que** le serveur de localisation a pour fonction de :

recevoir des mesures de RSS observées à de multiples localisations prédéfinies respectives au sein de la région à partir de points d'accès respectifs parmi de multiples points d'accès accessibles au niveau de la région ;
discrétiser les mesures de RSS par le compartimentage des mesures dans des compartiments sélectionnés respectifs d'un nombre prédéfini de compartiments sur un intervalle défini par des mesures de RSS observées maximale et minimale sur toutes les localisations prédéfinies pour les multiples points d'accès, chaque compartiment représentant une plage respective de valeurs de RSS ; et

comparer l'empreinte digitale RF avec une empreinte digitale préexistante donnée à l'aide d'un ensemble de mesures de pondération d'entropie dont chacune correspond à l'un des multiples points d'accès et est générée à partir d'une valeur d'entropie correspondante calculée à l'aide d'une fonction de probabilités dont chacune correspond à la probabilité d'observer une valeur de RSS pour le point d'accès au sein d'un compartiment respectif.

**8.** Serveur de localisation selon la revendication 7, dans lequel la région est divisée en de multiples zones, le serveur de localisation ayant en outre pour fonction de :

déterminer une zone de la région au sein de laquelle l'UE est localisé à l'aide de l'ensemble de mesures de pondération d'entropie pour la région ; et
déterminer la localisation de l'UE au sein de la zone à l'aide d'un ensemble de mesures de pondération d'entropie associées à la zone en question.

**9.** Serveur de localisation selon la revendication 7 ou la revendication 8, dans lequel le serveur de localisation a pour fonction de calculer une distance euclidienne modifiée $D_j$ dans un espace de signal entre l'empreinte digitale RF issue de l'UE et chaque j-ième empreinte digitale issue de l'ensemble d'empreintes digitales RF préexistantes pour la région selon :

$$D_j = \frac{1}{N}\sqrt{\sum_{i=1}^{N} w_i \left( r_i^{(UE)} - r_i^{(F_j)} \right)^2}$$

où $w_i$ est la mesure de pondération d'entropie du i-ème point d'accès et $r_i^{(UE)}$, $r_i^{(Fj)}$ sont les RSS issues du ième point d'accès au niveau de l'UE et à la localisation correspondant à la jième empreinte digitale RF, respectivement.

**10.** Serveur de localisation selon la revendication 9, dans lequel le serveur de localisation a pour fonction de générer une mesure de pondération d'entropie pour un point d'accès i par le calcul de :

$$w_i = \frac{E_i}{\sum_{j=1}^{N} E_j}$$

dans lequel $0 \leq w_i \leq 1, \sum_{i=1}^{N} w_i = 1,$ N est le nombre total de points d'accès contribuant à l'estimation de localisation et $E_i$ est la valeur d'entropie correspondant au point d'accès i.

11. Produit programme d'ordinateur, comprenant un support utilisable par ordinateur ayant un code de programme lisible par ordinateur incorporé dans celui-ci, ledit code de programme lisible par ordinateur étant conçu pour être exécuté dans un ordinateur d'un serveur de localisation selon l'une quelconque des revendications 7 à 10 pour mettre en œuvre un procédé pour une utilisation dans la détermination de la localisation d'un équipement utilisateur au sein d'une région selon l'une quelconque des revendications 1 à 6.

FIG. 1

FIG. 2

FIG. 3

100

Zone 4

Zone 2

Zone 3

Zone 5

Zone 1

FIG. 4

FIG. 5

FIG. 6

100

AP4

First location estimate

Second location estimate

Final location estimate

100

FIG. 7

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B. MOHTASHEMI ; T. KETSIOGLOU.** Source-Observation Weighted Fingerprinting for Machine-Learning-Based Localisation. *IEEE Wireless Telecommunications Symposium,* 2014, I-6
- The Evaluation of Wi-Fi Positioning in a Bluetooth and Wi-Fi Coexistence Environment. **L. PEI et al.** Ubiquitous Positioning, Indoor Navigation and Location-Based Service (UPINLBS). IEEE, 2012, I-6
- A Probabilistic Approach to WLAN User Location Estimation. **T. ROOS et al.** International Journal of Wireless Information Networks. Plenum Publishing, 09 July 2002